# EUROPEAN PATENT APPLICATION

(11) **EP 0 749 026 A2**
(43) Date of publication of application: **18.12.1996**
(21) Application number: 96401283.5
(22) Date of filing: 13.06.1996
(51) Int. Cl.: G02B 6/38

(54) **An optical fiber connector**

(30) Priority: 13.06.1995 JP 146348/95
(71) Applicant: SUMITOMO WIRING SYSTEMS, LTD., Yokkaichi City Mie 510 (JP)
(72) Inventor: Yamamura, Takehiko, c/o Sumitomo Wiring Syst. Ltd., Yokkaichi-city, Mie 510 (JP); Yuuki, Hayato, c/o Sumitomo Wiring Syst. Ltd., Yokkaichi-city, Mie 510 (JP)
(74) Representative: Dronne, Guy

(57) **Abstract**

The optical fiber connector (1) comprises a fixing device (20) containing a clamping member (21) and a holding member (24), as well as a connector housing (10) provided with ferrules (17) and an opening (15). The optical fiber (F) to be connected has a coated portion (c) and a non-coated end portion (f). The coated portion (c) of the fiber (F) is fixed by the clamping member (21), and the latter is itself fixed by the holding member (24). The fixing device (20), together with the optical fiber (F), is fitted into the connector housing (10) through its opening (15), so that the non-coated end portion (f) of the fiber (F) is secured in the ferrule (17). The clamping member (21) may comprise a cylindrical portion (22), by which the coated optical fiber (c) is fixed, and a flange (23) by which the clamping member (21) is fixed to the holding member (24). The holding member (24) can be formed by a pair of elements (25). One face of each element (25) is configured such that, when the two elements (25) are stacked, they fixedly cover the clamping member (21) and the coated fiber (c). The whole structure is then fitted into the connector housing (10).

## Description

The present invention relates to an optical fiber connector for connecting together optical fibers, or for connecting an optical fiber with a light emitting or a light receiving element.

The invention also relates to a method of fixing such an optical fiber connector into an optical fiber connector housing.

Known optical fiber connectors include a connector housing made of resin and integrally formed with ferrules, or a connector housing also made of resin and fitted with metallic ferrules.

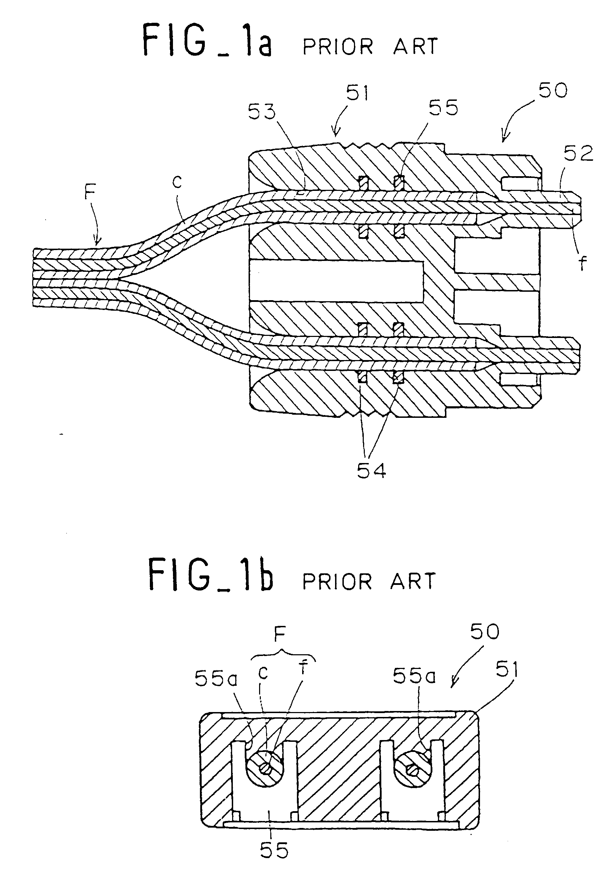

Figures 1 a and b show a known optical fiber connector 50 comprising a connector housing 51 made of resin and integrally formed with ferrules 52. The housing 51 further comprises metallic claws 55 for fixing a group of optical fibers F. The metallic claws are generally U-shaped, as seen in the lateral view of the connector (figure 1 b). In this type of device, the housing 51 and the optical fiber F are connected as follows.

Each optical fiber F is stripped of its coating c at its terminal section, thereby exposing a fiber core f. The optical fiber F is then inserted into the connector housing 51 through insertion paths 53, so that the fiber core f fits into a corresponding ferrule 52.

The insertion paths 53 of the connector housing 51 are provided with slits 54 into which the fixing claws 55 are pressingly inserted from their edge so as to engage with the fiber.

The fixing claws 55 are thereby pressed by an edge portion 55a against the coating c of the optical fiber F, such that the optical fiber F is fixed in the connector housing 51.

In the above-mentioned optical fiber connector 50, each optical fiber F is fixed into the connector housing 51 by thrusting the claws 55 onto the coating c of the fiber F. By this method, around 80 N of fixing force can be obtained between the optical fiber F and the connector housing 51. However, by pulling the fiber F in excess of this level, it will be disengaged from the connector housing 51. This level of fixing force is not sufficient for vehicle applications, where at least 100 N of fixing force are required for optical fiber connectors.

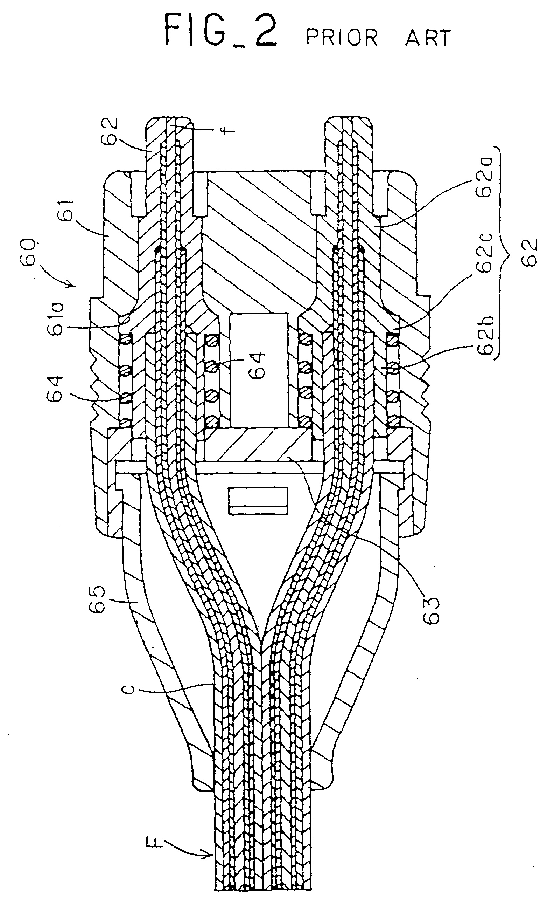

Figure 2 shows another known optical fiber connector 60 comprising a connector housing 61 made of a resin and enclosing metallic ferrules 62. A stopper part 63 prevents the ferrules 62 from disengaging. A spring 64 pushes the ferrules 62 towards the end section of the connector housing. A protective cover 65 protects the insertion section where the optical fiber F is introduced into the connector housing 61.

The ferrules 62 comprise a fiber core holding part 62a which has a comparatively small inner diameter and through which the fiber core f of the optical fiber F is inserted, a coated-fiber portion holding part 62b, which has a comparatively large inner diameter and through which the coated part c of the optical fiber is inserted, and a flange part 62c projecting radially outwardly at the periphery between the core holding part 62a and the coated-fiber portion holding part 62b. The flange part 62c forms an abutment face for the spring 64.

In such an optical fiber connector 60, the optical fiber F is fixed to the connector housing 61 as follows.

The terminal portion of the coated part c of each optical fiber F is stripped, so that the fiber core f is exposed. This terminal is inserted into the ferrule 62, such that the coated portion c of the optical fiber F is pressingly fixed by the holding part 62b. Then, the springs 64 are fitted in the peripheral area of the holding part 62b of the ferule 62.

After they have been fixed together, the fiber terminal and the ferrule 62 are set into the connector housing 61 such that the stopper part 63 pressingly abuts the springs 64 against the flange part 62c of the ferrule 62.

When viewed in a lateral cross-section, the inner surface of the connector housing 61 presents a stepped profile 61a. When the ferrule 62 is held in the connector housing 61, the flange 62c is pressingly abutted against the stepped profile 61a, thereby ensuring the fixing of each optical fiber F.

With such an optical fiber connector 60 having metallic ferrules 62, the coating c of the fiber F is pressingly fixed by the coating holding-part 62b of the ferrule 62. While this method can provide a fixing force in excess of 100 N, it requires precision metal-forming of the ferrules. This leads not only to higher ferrule production costs, but also to a need for other parts, such as ferrule-pushing springs 64 etc., with the consequence of further increasing costs compared to the other known optical fiber connector 50.

It is therefore an object of the present invention to provide an optical fiber connector that can be fixed firmly to the connector housing and can be manufactured in an economical way. It is another object to provide a method for fixing an optical fiber into a connector housing.

To solve the above-mentioned problems with the prior art, there is provided an optical fiber connector for connecting an optical fiber having a coated portion, and a non-coated end portion, the connector comprising:
- a connector housing;
- ferrules provided with the connector housing; and
- a fixing device comprised of a clamping member and a holding member. The clamping member pressingly fixes the coated portion of the optical fiber, while the holding member holds the clamping member so as to leave free the non-coated end portion. The fixing device is fitted into the connector housing so that the non-coated end portion of the fiber is secured in the ferrule.

The clamping member may comprise a projecting flange portion. In this case, the holding member comprises a corresponding recess, the flange portion being fitted into the recess so that the clamping member is mechanically fixed to the holding member.

Preferably, the clamping member comprises a tubular portion, through which the optical fiber is pressingly fixed, and a radially projecting flange portion. In this case, the holding member is comprised of a pair of mutually stackable elements having a contacting face. The contacting face is configured so that, when stacked, it fixedly covers the clamping member and a part of the coated fiber, whereupon the clamping member is mechanically fixed to the holding member.

Moreover, at least one of the stackable elements may be provided with protrusions on the side opposite the contacting face, while the connector housing is provided with corresponding holes. The protrusions are fitted into the holes so that the holding member, which is comprised of the stackable elements, can be mechanically fixed to the connector housing.

The clamping member may be a metallic plate that wraps around the coated portion of the optical fiber, thereby defining a cylindrical shape for pressingly fixing the fiber.

Preferably, the metallic plate is partially provided with protrusions projecting outwardly from the wrapped metallic plate. In this case, the holding member comprises corresponding recesses, the protrusions being fitted into the recesses so that the clamping member is mechanically fixed to the holding member.

The connector housing may be integrally provided with ferrules on one of its sides, and corresponding ferrule housings defining a space around the ferrules. The ferrule housings are adapted for receiving another connector housing. An opening is provided in the housing at a side opposite the ferrules for receiving the fixing device.

The aforementioned opening has an internal section which narrows stepwise towards the ferrule side, thereby forming an internal step against which the advancing edge of the holding member is abutted.

The invention also provides a method of connecting an optical fiber to a connector housing, comprising the steps of:
- preparing an optical fiber having a coated portion and a non-coated end portion;
- pressingly fixing the coated portion of the optical fiber by a clamping member;
- holding the clamping member with a holding member so as to leave free the non-coated end portion of the optical fiber, the clamping member and the holding member constituting a fixing device; and
- fitting the fixing device into a connector housing provided with ferrules, so that the non-coated end portion of the optical fiber is secured in the ferrule.

With this method, the coated portion of the optical fiber may be pressingly fixed by the clamping member through at least three force components exerted from at least three different directions.

The above configuration ensures a fixing force of 100 N between the connector housing 10 and the optical fiber F. Moreover, it requires no other parts, like the springs used in the known optical fiber connectors equipped with metallic ferrules, thereby reducing the number of necessary parts.

Also, unlike the known metallic ferrules, the clamping member 21 is not used in direct connection with the optical elements. Hence, this member 21 can be manufactured economically, without the need for high-precision manufacturing. This, together with the reduced number of parts described above, allows a reduction of the total manufacturing costs of the optical fiber connector.

As for fixing the clamping member 21, a method for ferrule fixing, such as already disclosed by the present inventors in Japanese Patent Application Hei 4-156 003 (1992), publication Hei 5-323 150 (1993), may be applied: the cylindrical part 22 in the clamping member 21, after insertion of the optical fiber F, is pressed from its outer circular face towards the fiber core f of the optical fiber F, through at least three different directions. This method further enhances the strength, the fixing force being in excess of 100 N.

The above and other objects, features and advantages will be made apparent from the following description of the preferred embodiments, given as a non-limiting example, with reference to the accompanying drawings, in which:
- figures 1a and b show a known connector in which a connector housing and ferrules are integrally provided in resin; and,
- figure 2 shows another known connector in which a connector housing made of resin is provided with metallic ferrules.
- figure 3 shows an exploded view of an optical fiber connector according to the invention;
- figure 4 shows a cross-sectional view of the assembled optical fiber connector of the invention;

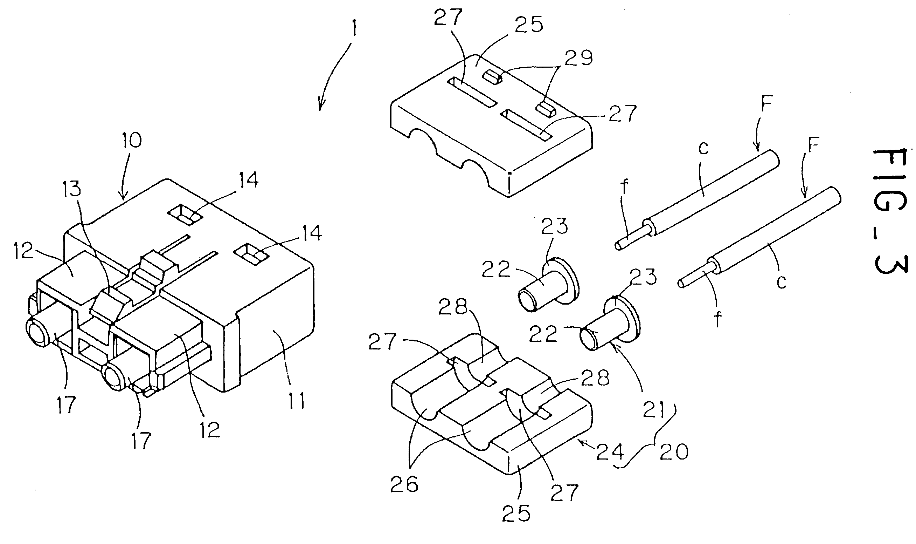

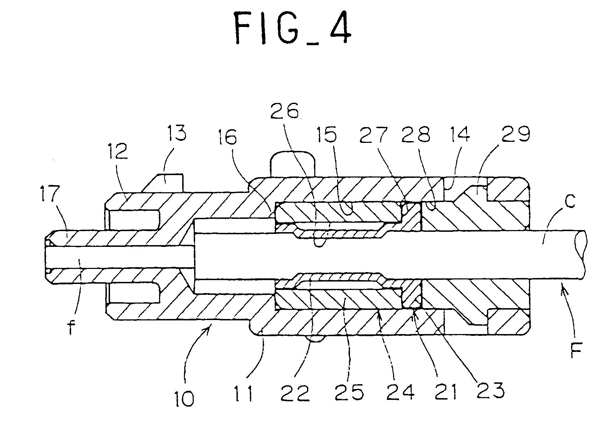

As shown in Figures 3 and 4, the optical fiber connector 1 is comprised of a connector housing 10 made of a resin and a fixing device 20 which holds an optical fiber F and inserts fixedly into the connector housing 10.

The connector housing 10 comprises a rectangular shaped main housing portion 11. Ferrules 17 are integrally provided on one side (front side) of the main housing portion. The side of the main housing portion opposite the ferrules (rear side) has an opening for receiving the optical fiber F.

The main housing portion 11 near the front side is provided with a connecting member 13 that serves to connect the main housing portion with another connector housing (not shown in the figures). Likewise, the main housing portion 11 is provided, on its outer face near the rear side, with holes 14 that couple with protrusions 29 of a fixing device 20 hereinafter described.

Figure 4 is an inside view of the opening 15 of the main housing portion 11. The opening 15 serves as a receiving part for lodging the fixing device 20. The receiving part includes a stepwise narrowed section 16 that abuts against the edge of the fixing device 20 and determines its position.

As shown in Figure 3, the fixing device 20 is comprised of a clamping member 21 made of a metal, such as brass, and a holding member 24 for holding the clamping member 21.

The clamping member 21 is comprised of a cylindrical portion 22 provided with a passage for the optical fiber and a flange portion 23 integrally formed at one end thereof. The flange portion projects radially outwardly from the cylindrical portion.

The optical fiber F is fixed by passing it through the cylindrical portion 22, which is then tightened from the outside.

The holding member 24 is comprised of a pair of complementary elements 25 made of a resin. Each complementary element 25 is provided with a channel 26 having semi-circular cross-section into which the cylindrical portion 22 of the clamping member 21 is received, together with the optical fiber F to which it is fixed. A slit 27 is provided where the flange portion 23 of the clamping member 21 is fitted. Another channel 28 with semi-circular cross-section is provided to receive the coated part c of the optical fiber F. The outer surface of one of the complementary elements 25 is provided with locking claws 29 which couple with holes 14 formed in the connector housing 10.

Once the clamping member 21 is firmly fixed with the optical fiber F, the former is held by the elements 25, so that the clamping member 21 is precisely positioned and then retained by the holding member 24. The thus-prepared structure is then inserted in the receiving part 15 of the connector housing 10 as one block.

Figure 3 shows the installation of the optical fiber F into the above-configured optical fiber connector 1: the optical fiber F is stripped of its coating at its terminal area, thereby exposing its fiber core f. The optical fiber F is then inserted into the cylindrical portion 22 of the clamping member 21 and the coated part c is pressingly fixed by the cylindrical portion 22. Thereafter, the clamping member 21 is held between the divided elements 25 of the holding member 24.

When the clamping member 21 and the holding member 24 which form the fixing device 20 are inserted into the receiving part 15 of the connector housing 10, the edge of the fixing device 20 abuts against the narrowing step 16. Then, the locking claw 29 couples with the hole 14, so that the fixing device 20 is held in the connector housing 10, as shown in Figure 4. At the same time, the exposed fiber core f is inserted into the ferrule 17, so that the optical axis of the fiber F is protected from dislocation.

If the resin forming the holding member is sufficiently strong, the clamping member need not be provided with the stopper part. In this case, the holding member may be provided with a stopper part, whilst the clamping member is provided with a matching recess with which the stopper is fitted.

## Claims

1. An optical fiber connector (1) for connecting at least one optical fiber(F) having a coated portion (c) and a non-coated end portion (f), said connector (1 ) comprising,
- a connector housing (10);
- at least one ferrule (17) provided with said connector housing (10); and
- a fixing device (20);
said connector being characterised in that said fixing device (20) is comprised of a clamping member (21) and a holding member (24), said clamping member (21) pressingly fixing said coated portion (c) of said at least one optical fiber (F), said holding member (24) holding said clamping member (21) so as to leave free said non-coated end portion (f), said fixing device (20) being fitted into said connector housing (10), so that said non-coated end portion (f) is secured in said ferrule (17).

2. An optical fiber connector (1) according to claim 1, wherein said clamping member (21) comprises a flange portion (23) projecting from said clamping member (21) and wherein said holding member (24) comprises a corresponding recess (27), said flange portion (23) being fitted into said recess (27), so that said clamping member (21) is mechanically fixed to said holding member (24).

3. An optical fiber connector (1) according to claim 1 or 2, wherein said clamping member (21) comprises a tubular portion (22) through which said optical fiber (F) is pressingly fixed and a flange portion (23) projecting radially outwardly from said tubular portion (22), and wherein said holding member (24) is comprised of a pair of mutually stackable elements (25) having a contacting face, said contacting face being configured so as to fixedly cover, when stacked, said clamping member (21) and a part of said coated fiber (c), so that said clamping member (21) is mechanically fixed to said holding member (24).

4. An optical fiber connector (1) according to claim 3, wherein at least one of said mutually stackable elements (25) is provided with protrusions (29) on a side thereof that is distal relative to said contacting face, said connector housing (10) being provided with corresponding holes (14), said protrusions (29) being fitted into said holes (14) so that said holding member (24), comprised of said elements (25), is mechanically fixed to said connector housing (10).

5. An optical fiber connector (1 ) according to any one of claims 1 to 4, wherein said clamping member (21) is a metallic plate, said metallic plate wrapping around said coated portion (c) of the optical fiber (F).

6. An optical fiber connector (1) according to claim 5, wherein said metallic plate is partially provided with protrusions projecting outwardly from said wrapped metallic plate and wherein said holding member (24) comprises corresponding recesses, said protrusions being fitted into said recesses so that said clamping member (21) is mechanically fixed to said holding member (24).

7. An optical fiber connector (1 ) according to any one of claims 1 to 6, wherein said connector housing (10) is integrally provided with at least one ferrule (17) on one side of said connector housing (10), said connector housing (10) defining a space around said ferrule (17) for receiving another connector housing, and an opening (15) on a side of said housing (10) that is distal with respect to said first side, said opening (15) being adapted to receive said fixing device (20).

8. An optical fiber connector (1) according to claim 7, wherein said opening (15) has an internal section (16) stepwise narrowing towards the ferrule (17), thereby forming an internal step against which an advancing edge of said holding member (24) is abutted.

9. A method for connecting at least one optical fiber (F) to a connector housing (10), said method comprising the steps of:
- preparing at least one optical fiber (F) having a coated portion (c) and a non-coated end portion (f);
- pressingly fixing said coated portion (c) of the said at least one optical fiber (F) using a clamping member (21);
- holding said clamping member (21) using a holding member (24) so as to leave free said non-coated end portion (f) of the said at least one optical fiber (F), said clamping member (21) and said holding member (24) constituting a fixing device (20); and
- fitting said fixing device (20) into a connector housing (10) provided with ferrules (17), so that said non-coated end portion (f) of the said at least one optical fiber (F) is secured in said ferrule (17).

10. A method for connecting at least one optical fiber (F) according to claim 9, wherein said coated portion (c) of the said at least one optical fiber (F) is pressingly fixed by said clamping member (21) through at least three force components exerted thereon from three different directions.
